# EUROPEAN PATENT APPLICATION

(11) **EP 4 542 100 A1**
(43) Date of publication of application: **23.04.2025**
(21) Application number: 24199919.2
(22) Date of filing: 12.09.2024
(51) Int. Cl.: F16L 41/08, B64C 3/18, B64C 3/34, B64D 37/00, F16L 41/12

(54) **CONNECTOR FOR FUEL STRINGER DUCT**

(30) Priority: 16.10.2023 GB 202315804
(71) Applicant: Airbus Operations Limited, Bristol BS34 7PA (GB)
(72) Inventor: DEACON, Jonathan, Bristol, BS34 7PA (GB); PEACHEY, Daniel, Bristol, BS34 7PA (GB); COOPER, William, Bristol, BS34 7PA (GB)
(74) Representative: Lerwill, Jonathan Ashley Ronald

(57) **Abstract**

A connector (1) for connecting a fluid flow duct to a fuel stringer duct is disclosed. The connector (1) comprises a body (7) having an internal channel (17) for fluid passage between a first opening (9) and a second opening (13) of the body (7). A flange (19) surrounds the first opening (9), the flange (19) being configured for insertion into a hole formed in a wall of the fuel stringer duct. An outer surface (191) of the flange (19) is provided with a first sealing member (20) that surrounds the flange (19), the first sealing (20) member being configured to form a seal between the outer surface (1191) of the flange (19) and an internal surface of the hole formed in the wall of the fuel stringer duct.

## Description

### BACKGROUND OF THE INVENTION

The present disclosure relates to a connector for connecting a fuel stringer duct to another fluid flow duct. In particular, the present disclosure relates to a connector configured to form a seal between a flange of the connector and an internal surface of a hole in a fuel stringer duct. The present disclosure also relates to an aircraft structure comprising a fuel stringer duct and connector.

It is known to use aircraft hat section wing stringers, which are also known as omega stringers, as ducts to conduct fluids as both liquids and gasses in a spanwise direction of the wing. Stringers are stiffening members that are fixed to the wing skin and which run in a spanwise direction of the wing, from wing root to wing tip. The cross-sectional shape of a hat stringer is defined by two spaced-apart co-planar flanges for attachment of the stringer to a panel being stiffened, a pair of spaced-apart upstanding webs attached to inner edges of the flanges and a crown bridging across distal ends of the webs. Such a stringer, when attached to a panel being stiffened, forms a closed channel which is capable of conducting fluids along its length.

In particular, with modern civil airliners using the space within the wing for fuel tanks, such hat section stringers may be used to conduct fuel, fuel vapour or air between fuel tanks along the span of the wing. Such stringers have become known as fuel stringer ducts (FSDs) and in particular are used to vent air from a centre fuel tank and one or more wing tanks to a surge tank usually located in an outboard section of the wing. Air enters the FSD in a given tank via a bell mouth or a float vent valve located inside and near to the top of the tank. The bell mouth or float valve is usually connected to the FSD by a length of pipe.

One known method of attaching a pipe connector, usually an elbow connector, to the FSD is by adhesion. If the wing cover is made of carbon fibre reinforced plastic (CFRP), the FSD is likely to comprise the same material and to be co-cured in position against the cover to form an integrated structure. In such a case, a connector for connecting the pipe to the carbon fibre FSD is shaped to fit around the hat section of the FSD and to be adhered to the FSD either by co-curing in position or by the use of an adhesive. However, the use of such a bonded connection between the connector and FSD means that, if damaged, the connector cannot easily be removed and replaced. Such connectors, because they sit proud of the FSD, are liable to damage.

Another known method of attaching a pipe connector to an FSD involves the use of a connector such as that disclosed by EP3590825A1, wherein the connector has a bridge to bridge over the FSD and cover an aperture in a wall of the FSD. The bridge is configured such that the connector is attachable to a panel at either side of the FSD by fasteners passing though the bridge. In this arrangement a seal is provided between an external surface of the FSD such as an upper surface of the crown, for example, and a surface of the connector. However, because there is likely to be some variability in the size of the as-cured composite FSD, albeit small, the external surface of the FSD which forms the sealing surface is provided with a layer of sacrificial material that can be machined away as appropriate post-cure in order to provide the FSD with an external surface that mates perfectly with the connector. As such, the FSD may have to be machined post-cure in order to ensure a fluid-tight seal between the FSD and connector.

The present invention seeks to mitigate one or more of the above-mentioned problems. Alternatively or additionally, the present invention seeks to provide an improved connector for connecting an FSD to another fluid flow duct

### SUMMARY OF THE INVENTION

The present invention provides, according to a first aspect, a connector for connecting a fluid flow duct to a fuel stringer duct, the connector comprising a body, the body comprising a first opening on a first face, a second opening on a second face, the second face being configured for connection with the fluid flow duct, an internal channel for fluid passage between the first opening and the second opening, and a flange that surrounds the first opening on the first face, the flange being configured for insertion into a hole formed in a wall of the fuel stringer duct, wherein an outer surface of the flange is provided with a first sealing member that surrounds the flange, the first sealing member being configured to form a seal between the outer surface of the flange and an internal surface of the hole formed in the wall of the fuel stringer duct.

The first face may be configured for positioning in abutment with a surface of the FSD. The first face may alternatively or additionally be configured for positioning in spaced relation to a surface of the FSD. The second face may be configured for positioning in abutment with the fluid flow duct. The flange may extend in a direction away from the first face. The outer surface of the flange may be in a plane perpendicular to a plane defined by the first face.

The connector according to the invention is configured such that, when connected to an FSD, the first sealing member forms a seal between the flange of the connector and the internal surface of the hole in the FSD. The hole in the FSD can be moulded or machined post-cure with a size having a relatively low tolerance. Because the hole in the FSD can be produced at a consistent size and with an internal wall having a suitable surface finish, the internal wall of the hole provides an ideal surface for forming a seal against.

The first sealing member may be spaced apart from the first face of the body. The first sealing member is spaced apart from the first face of the body by between approximately 2 and 6 millimetres. The first sealing member may be spaced apart from the first face of the body by between approximately 3 and 5 millimetres.

In some embodiments, the first sealing member is an o-ring. The outer surface of the flange may be formed with a groove which extends around the circumference of the flange and the o-ring may be situated within the groove. The o-ring may be formed from a polymer. The polymer may be fluorosilicone, or any other suitable polymer. The groove may be spaced apart from the first face of the connector.

The connector may comprise bridging members that extend from the body at opposing sides of the first opening, the bridging members being configured to bridge over the FSD at either side of the FSD. The bridging members may comprise a foot for securing the connector to a surface at either side of the FSD. There may be two bridging members. Each bridging member may extend in a direction away from the first face of the body. The body may form a crown between the two bridging members. Each bridging member may comprise a web between the foot and the body. The bridging members may be configured such that the body is held in a fixed position relative to the FSD by securing the connector to the surfaces of the aircraft structure at either side of the FSD.

A connector according to the first aspect of the invention comprising bridging members is less sensitive to the manufacturing tolerance of the FSD than prior art connectors comprising bridging members which form a seal between a face of the connector and an external surface of the FSD. For example, a slight variation in the height of the crown between different FSDs should not affect the ability of the connector to form a seal with the internal surface of the holes of each of the FSDs. This is because a small shift in the height of the crown of an FSD will merely change the location at which the sealing member engages with the internal wall of the hole, and will not move the sealing surface (i.e. the internal wall of the hole) away from the first sealing member.

The connector may be provided with holes for fastening the connector to the FSD. The holes may be provided through the body of the connector. The holes may be provided in the feet of bridging members, where present. The connector may therefore be configured to be releasably fastenable to the FSD.

According to a second aspect, the present invention provides an aircraft structure comprising a fuel stringer duct and a connector according to the first aspect of the invention. The fuel stringer duct comprises a wall formed with a hole through the thickness of the wall, wherein the flange of the connector is positioned within the hole, and the first sealing member forms a seal between the outer surface of the flange and an internal surface of the hole, the first sealing member being positioned between opposing external surfaces of the wall. As such, the first sealing member is located at a position through-the-thickness of the wall of the fuel stringer duct. One of the external surfaces of the wall may be an external surface of the fuel stringer duct. One of the external surfaces of the wall may be an internal surface of the fuel stringer duct.

The internal surface of the hole may define the hole by forming an internal wall of the hole. It will be understood that the internal surface of the hole will be positioned between opposing external surfaces of the wall. The internal surface of the hole may be in a plane perpendicular to a plane defined by the first face of the connector. The internal surface of the hole may be in a plane perpendicular to a plane defined by a surface of the wall in which the hole is formed.

The first sealing member may be located at between an outer surface and an inner surface of the wall. The inner surface may form an internal surface of FSD. The wall of the FSD may be formed from a composite such as, for example, CFRP. The wall may have a thickness of between 5 millimetres and 10 millimetres. The wall may have a thickness of approximately 8 millimetres, for example.

The internal surface of the hole may be formed by an additional sealing member. The first sealing member may be in direct contact with the additional sealing member to form the seal between the outer surface of the flange and an internal surface of the hole. The hole may be machined in the FSD post-cure or the hole may be moulded in the FSD. The additional sealing member may be a bushing provided in the hole. The bushing may be "wet assembled" in the hole, meaning a sealant may be provided between the bushing the wall defining the hole in the FSD. The additional sealing member may be formed from PEEK, or any other suitable material.

The connector may comprise bridging members that bridge over the FSD at either side of the FSD, wherein the feet of the bridging members are secured to a surface of the aircraft structure at the side of the FSD. The feet may be fastened to the surface using fasteners. Alternatively, the connector may be fastened to a wall of the FSD.

The FSD may be mounted upon a panel. The panel may, for example, be a wing skin. The FSD may be co-cured with the panel.

It will of course be appreciated that features described in relation to the connector of the first aspect of the invention may be incorporated into the aircraft structure of the second aspect of the invention.

### DESCRIPTION OF THE DRAWINGS

Embodiments of the present invention will now be described by way of example only with reference to the accompanying schematic drawings of which:
FIG. 1 shows a connector according to a first embodiment of the invention;
FIG. 2 shows the connector of FIG. 1 in place upon an FSD;
FIG. 3 is a cross-sectional view of the connector of FIG. 1 in place upon the FSD;
FIG. 4 is a detailed view of the area within the box labelled X in FIG. 3;
FIG. 5 is an exploded view showing the FSD, connector, and a bushing for positioning between the FSD and connector;
FIG. 6 shows a connector according to a second embodiment of the invention; and
FIG. 7 is a cross-sectional view of the connector of FIG. 6 in place upon an FSD.

### DETAILED DESCRIPTION

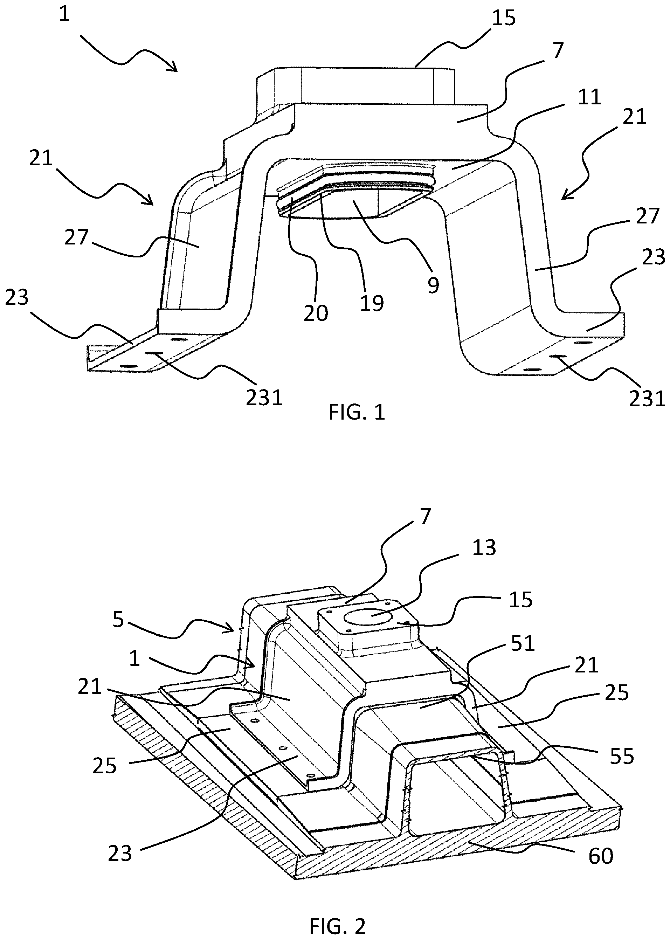

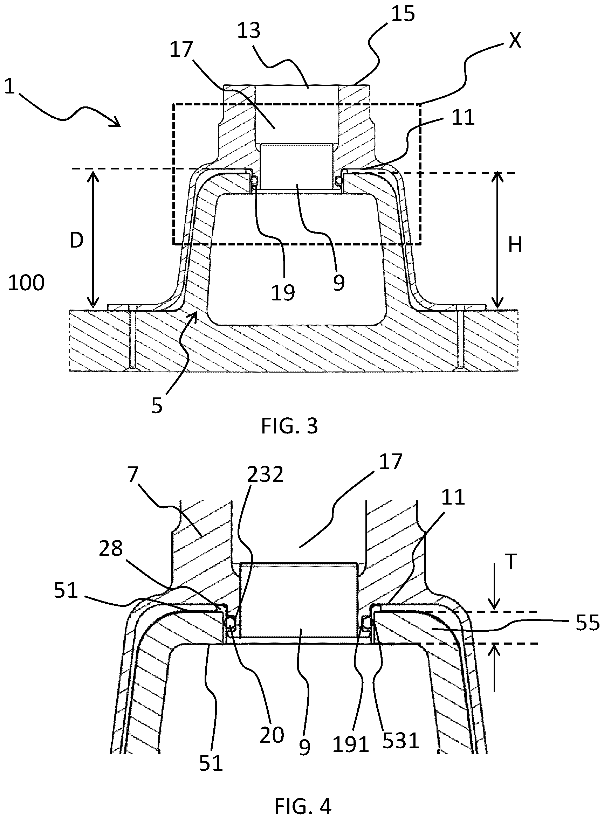

A connector 1 according to a first embodiment of the invention is shown in isolation in FIG. 1 and connected to a hat section FSD 5 of a composite aircraft structure in FIG. 2. In FIG. 2, the FSD is shown as fixed to a wing skin 60. However, in other embodiments of the invention, the FSD may be fixed to another part of the wing. The connector 1 comprises a body 7, or crown, having a first opening 9 on a first face 11 of the body 7, a second opening 13 on a second face 15, and an internal channel 17 that runs through the crown, as shown in FIG. 3, so that fluid can flow through the connector 1, between the FSD 5 and the fluid flow duct. A flange 19 extends from the first face 11 and defines an a first opening 9 on the first face 11. The outer surface 191 of the flange 19 is provided with an o-ring 20 that that surrounds the circumference of the flange 19.

The connector 1 comprises bridging members 21 that extend from the body 7 at opposing sides of the first opening 9. As can be best seen in FIG. 2, the bridging members 21 extend away from the first face 11 and are configured to bridge over the FSD 5 at either side of the FSD 5 to hold the body 7 of the connector 1 above the upper surface 51 of the wall forming the crown 55 of the FSD 5. Each of the bridging members 21 comprises a foot 23 formed with holes for securing the connector to a surface 25 at either side of the FSD and a web 27 between the foot 23 and the body 7.

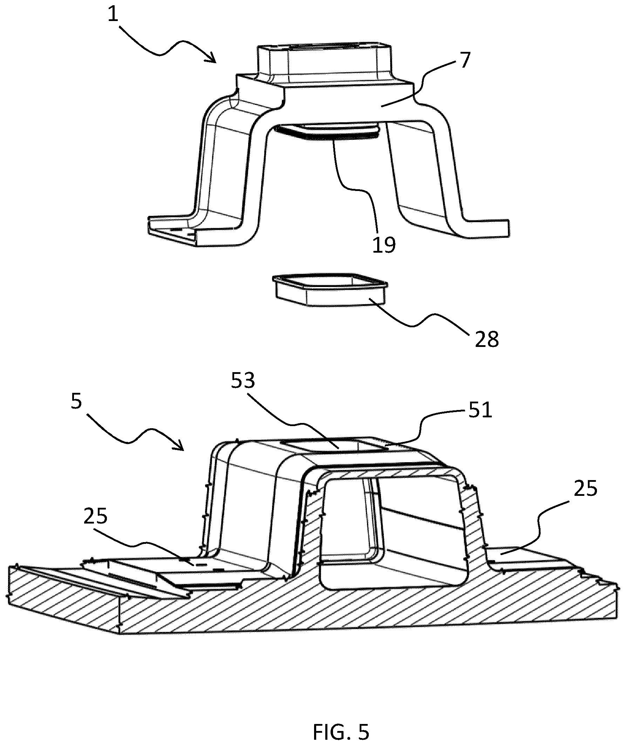

With reference to FIGS. 3 and 4, the flange 19 that extends from the first face 11 is configured to inserted into a hole 53 formed in the wall forming the crown 55 of the FSD 5. The hole 53 can be moulded in the FSD 5 during the curing process or alternatively the hole 53 can be machined in the FSD post-cure. As can be best seen in FIG. 4, the o-ring 20 is retained within a groove 232 formed in the outer surface 191 of the flange 19, the groove 232 and o-ring 20 being spaced apart from the first face 11 of the body 7 at a position approximately halfway along the height of the flange 19 (the height direction of the flange 19 being vertical in the orientation of the connector 1 as shown in the figures). In this case the hole 53 is lined with a bushing 28, which can be best seen in FIG. 5, such that the internal surface of the hole 53 is effectively formed by the bushing 28. In the presently described embodiment of the invention the bushing 28 is formed from PEEK because of its advantageous structural properties and corrosion resistance. However, other suitable materials may of course be used for the bushing. As can be best seen in FIG. 4, with the flange 19 positioned in the hole 53 of the FSD 5, the o-ring 20 is in direct contact with the bushing 28 such that the o-ring 20 forms a seal between the outer surface of the flange 191 and the internal surface 531 of the hole 53 in the FSD 5.

The inherent material variability of carbon fibre reinforce plastic (CFRP) FSD 5 may result in height H of the FSD 5, which is indicated in FIG. 3, varying between FSDs. In contrast, the height D of the connector 1, which is also indicated in FIG. 3, will generally be subject to much lower manufacturing tolerances due to it being machined from aluminium. In other embodiments, the connector may of course be formed from a different suitable material, such as corrosion-resistant steel (CRES). As such, the distance D-H between the upper surface 51 of the FSD 5 and the first face 11 of the connector 1 may be different for different FSDs, which can make it difficult to provide a reliable seal for the connector 1 between the upper surface 51 of the FSD 5 and the first face 11 of the connector 1 without requiring some extra machining of the FSD 5 (for example, by using sacrificial material which is machined down to size).

The connector 1 is configured such that, when connected to the FSD 5, a seal is formed between a flange 19 of the connector 1 and the internal surface 531 of the hole 53, the internal surface 531 of the hole 53 being in a plane that is perpendicular to the upper surface 51 of the FSD 5 (i.e. the location at which the seal is provided is within the hole 53, at a position between the upper surface 51 of the FSD 5 and opposing lower, internal surface 52 of the FSD 5). The seal is provided by an o-ring 20 that forms a sealing member which surrounds the flange 19 at a location that is spaced apart from the first face 11 of the body 7. This arrangement is particularly advantageous in embodiments of the invention such as the connector 1 described above, where the connector 1 comprises bridging members 21 configured to secure the connector 1 to surfaces 25 at either side of the FSD 5 because the connector 1 is insensitive to variations in the height H of the FSD 5 that are within the manufacturing tolerances of the FSD The height H of the FSD 5 may have a manufacturing tolerance of ±1 millimetre, for example. As long as the flange 19 can be positioned within the hole 53 such that the o-ring 20 can form a seal with the internal surface 531 of the hole 53, the connector 1 can form a fluid-tight seal with the FSD.

In embodiments of the invention, the flange 19 may be configured to locate the o-ring 20 at a depth equal to approximately half the expected thickness T of the wall 55 of the FSD. In the presently described embodiment, the FSD has a cured target thickness T equal to approximately 8 millimetres. As such, the connector 1 may be dimensioned to position the o-ring 20 at a depth of 4 millimetres, midway between the upper surface 51 of the FSD 5 and the opposing internal surface 52 of the FSD in an FSD having a height H equal to the exact target height. Positioning the o-ring 20 to be midway along the depth of the hole ensures equal positive and negative tolerances, in this case ± 4 millimetres, which much larger than the tolerance of the height of the FSD 5.

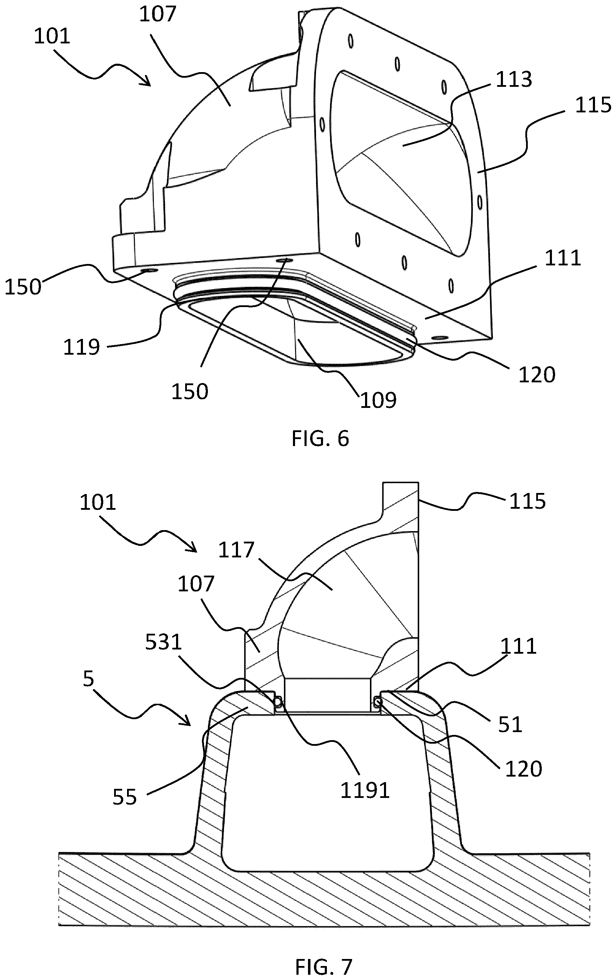

The invention is not limited to arrangements which bridge over the FSD, such as the connector 1 described above. A connector 101 according to a second embodiment of the invention is shown in FIGS. 6 and 7. The connector 101 comprises a body 107 having a first opening 109 on a first face 111 of the body 107, a second opening 113 on a second face 115, and an internal channel 117 that runs through the crown so that fluid can flow through the connector 1. It will be noted that the connector 101 of the second embodiment of the invention is an "elbow" connector, with the first opening 109 at the first face 111 lying in a plane oriented at approximately 90 degrees to the second opening 113 on the second face 115.

Similar to the connector 1 of the first embodiment, a flange 119 extends from the first face 111 of the body 107 and defines a first opening 109 on the first face 111, and the outer surface of the flange 119 is provided with an o-ring 120 that that surrounds the circumference of the flange 119. The flange 119 is configured to be inserted into a hole 53 formed in the upper surface 51 of the FSD 5 such that the o-ring 120 forms a seal between the outer surface of the flange 1191 and the internal surface of the hole 53 in the wall 55 of the FSD 5. In this case, the connector 101 does not comprise bridging members and is instead provided with holes 150 so that the first face 111 of the body 107 can be placed into abutment with the upper surface 51 of the FSD 5 and fastened directly to the FSD 5 using fasteners. While the holes 150 pass through the body 107 in the presently described embodiment of the invention, it will be appreciated other embodiments of the invention could be provided with holes elsewhere; for example, in co-planar flanges which extend from the sides of the body 107.

Whilst the present invention has been described and illustrated with reference to particular embodiments, it will be appreciated by those of ordinary skill in the art that the invention lends itself to many different variations not specifically illustrated herein.

Where in the foregoing description, integers or elements are mentioned which have known, obvious or foreseeable equivalents, then such equivalents are herein incorporated as if individually set forth. Reference should be made to the claims for determining the true scope of the present invention, which should be construed so as to encompass any such equivalents. It will also be appreciated by the reader that integers or features of the invention that are described as preferable, advantageous, convenient or the like are optional and do not limit the scope of the independent claims. Moreover, it is to be understood that such optional integers or features, whilst of possible benefit in some embodiments of the invention, may not be desirable, and may therefore be absent, in other embodiments.

The term 'or' shall be interpreted as 'and/or' unless the context requires otherwise.

## Claims

1. A connector for connecting a fluid flow duct to a fuel stringer duct, the connector comprising a body, the body comprising a first opening on a first face, a second opening on a second face, the second face being configured for connection with the fluid flow duct, an internal channel for fluid passage between the first opening and the second opening, and a flange that surrounds the first opening on the first face, the flange being configured for insertion into a hole formed in a wall of the fuel stringer duct, wherein an outer surface of the flange is provided with a first sealing member that surrounds the flange, the first sealing member being configured to form a seal between the outer surface of the flange and an internal surface of the hole formed in the wall of the fuel stringer duct.

2. A connector according to claim 1, wherein the first sealing member is spaced apart from the first face of the body.

3. A connector according to claim 2, wherein the first sealing member is spaced apart from the first face of the body by between approximately 2 and 6 millimetres.

4. A connector according to claim 3, wherein the first sealing member is an o-ring.

5. A connector according to claim 4, wherein the outer surface of the flange is formed with a groove which extends around the circumference of the flange and the o-ring is situated within the groove.

6. A connector according to any of claims 1 to 5, wherein the connector comprises bridging members that extend from the body at opposing sides of the first opening, the bridging members being configured to bridge over the fuel stringer duct at either side of the fuel stringer duct, wherein the bridging members comprise a foot for securing the connector to a surface at either side of the fuel stringer duct.

7. A connector according to any of claims 1 to 6, wherein the connector is provided with holes for fastening the connector to the fuel stringer duct.

8. An aircraft structure comprising a fuel stringer duct and a connector according to any of claims 1 to 7, the fuel stringer duct comprising a wall formed with a hole through the thickness of the wall, wherein the flange of the connector is positioned within the hole, and the first sealing member forms a seal between the outer surface of the flange and an internal surface of the hole, the first sealing member being positioned between opposing surfaces of the wall.

9. An aircraft structure according to claim 8, wherein the internal surface of the hole is formed by an additional sealing member and the first sealing member is in direct contact with the additional sealing member to form the seal between the outer surface of the flange and an in internal surface of the hole.

10. An aircraft structure according to claim 8 or claim 9, wherein the connector is a connector according to claim 6, and wherein the bridging members bridge over the fuel stringer duct at either side of the fuel stringer duct and each of the feet is secured to a surface of the aircraft structure at the side of the fuel stringer duct.

11. An aircraft structure according to claim 8 or claim 9, wherein the connector is a connector according to claim 7, and wherein the connector is fastened to a wall of the fuel stringer duct.
